(19) **Europäisches Patentamt / European Patent Office / Office européen des brevets**

(11) **EP 4 579 524 B1**

(12) **FASCICULE DE BREVET EUROPEEN**

(45) Date de publication et mention de la délivrance du brevet:
**22.04.2026 Bulletin 2026/17**

(21) Numéro de dépôt: **24223288.2**

(22) Date de dépôt: **26.12.2024**

(51) Classification Internationale des Brevets (IPC):
**G06N 3/044** *(2023.01)*     **G06N 3/047** *(2023.01)*
**G06N 3/0895** *(2023.01)*

(52) Classification Coopérative des Brevets (CPC):
**G06N 3/044; G06N 3/047; G06N 3/0895**

(54) **PROCÉDÉ DE DÉTECTION D'ANOMALIE DE PISTES ET DISPOSITIF ASSOCIÉ**

VERFAHREN ZUR ERKENNUNG VON SPURANOMALIEN UND ZUGEHÖRIGE VORRICHTUNG

TRACK ABNORMALITY DETECTION METHOD AND RELATED DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.12.2023 FR 2315426**

(43) Date de publication de la demande:
**02.07.2025 Bulletin 2025/27**

(73) Titulaires:
- **THALES**
  **92190 Meudon (FR)**
- **Centre National de la Recherche Scientifique**
  **75016 Paris (FR)**
- **Institut Polytechnique de Bordeaux**
  **33402 Talence Cedex (FR)**
- **Université de Bordeaux**
  **33000 Bordeaux (FR)**

(72) Inventeurs:
- **STEFFANUTTO, Lucas, Laurent, Didier**
  **33600 PESSAC (FR)**
- **SOUYRI, Benoit**
  **33700 MERIGNAC (FR)**
- **CORRETJA, Vincent**
  **33700 MERIGNAC (FR)**
- **GRIVEL, Eric, Jean**
  **33405 TALENCE (FR)**
- **GIREMUS, Audrey**
  **33405 TALENCE CEDEX (FR)**
- **LEGRAND, Pierrick**
  **33405 TALENCE (FR)**

(74) Mandataire: **Lavoix**
  **2, place d'Estienne d'Orves**
  **75441 Paris Cedex 09 (FR)**

(56) Documents cités:
- **DUONG NGUYEN ET AL: "GeoTrackNet-A Maritime Anomaly Detector using Probabilistic Neural Network Representation of AIS Tracks and A Contrario Detection", ARXIV.ORG, CORNELL UNIVERSITY LIBRARY, 201 OLIN LIBRARY CORNELL UNIVERSITY ITHACA, NY 14853, 2 February 2021 (2021-02-02), XP081873262**

**Description**

La présente invention concerne un procédé de détection d'anomalie de pistes.

L'invention a pour domaine celui de la discrimination d'anomalies dans des pistes, plus particulièrement des pistes maritimes, avioniques ou automobiles, et plus particulièrement encore des pistes maritimes AIS (de l'anglais « Automatic Identification System » pour « système d'identification automatique »).

Une piste est une série temporelle donnant à chaque pas de temps des informations du type position, vitesse et cap de l'objet pisté. La piste permet par exemple la reconstruction de la trajectoire suivie par l'objet pisté.

Une piste maritime AIS correspond à la série temporelle des messages AIS, émis par une balise AIS embarquée à bord d'un navire, en tant qu'objet pisté.

Chaque message AIS comporte des informations statiques et dynamiques relatives au navire. Notamment, un message AIS donne les informations instantanées de position géographique, vitesse, cap, statut de navigation et rayon de giration.

Les balises AIS ont des portées allant de 5 milles nautiques à 20 milles nautiques, selon la catégorie du système maritime AIS.

Les messages AIS sont captés par une station d'écoute, au sol ou embarquée à bord d'un avion de surveillance maritime. Les messages AIS peuvent être analysés soit en temps réel, soit en temps différé.

Parmi les analyses possibles, on connait la méthode de détection d'anomalies de pistes AIS de GeoTrackNet, avec une inférence utilisant une détection dite « à contrario ».

Cette méthode est par exemple présentée à l'adresse: « https://github.com/CIA-Oceanix/GeoTrack Net ». Elle est aussi détaillée dans la publication de Duong Nguyen et al, "GeoTrackNet-A Maritime Anomaly Detector using Probabilistic Neural Network Representation of AIS Tracks and A Contrario Detection", ar-Xiv:1912.00682v4, 2021.

Cette méthode s'appuie sur l'utilisation d'un algorithme d'intelligence artificielle dénommé GeoTrack-Net. Suite à une phase d'apprentissage, un réseau de neurones convenablement paramétré est utilisé en inférence pour calculer un score de log vraisemblance pour chaque message AIS d'une piste d'intérêt.

Puis, le score de chaque message permet de classer ce message soit comme normal, soit comme anormal.

Si la piste d'intérêt comporte un trop grand nombre de messages anormaux, elle est annotée comme anormale.

Cependant, cette méthode nécessite des ressources calculatoires importantes pour l'inférence, notamment lorsque la piste d'intérêt contient beaucoup de messages. En effet cette méthode nécessite le calcul d'une loi binomiale cumulée croissante sur chaque sous-segment d'une piste.

De plus, cette méthode n'est pas adaptée au temps réel car elle nécessite un temps d'inférence de détection d'anomalies à partir des log-vraisemblances de l'ordre de 2 minutes pour un lot de 100 pistes AIS.

De plus, avec cette méthode, le seuil de détection doit être réglé en fonction de la durée de la piste et varie énormément (de l'ordre de 10 pour une piste de 10 mn, à $1.10^{-7}$ pour une piste de 4h).

Les performances de détections d'anomalies de cette méthode sur des pistes courtes (10 à 30 mn) pourraient également être améliorées.

On comprend alors que, particulièrement pour des systèmes embarqués, dont les ressources informatiques sont contraintes, il existe un besoin pour un procédé de détection d'anomalies de pistes qui soit moins coûteux en termes de ressources numériques et qui permette un traitement en temps réel.

De plus, on souhaiterait pouvoir réaliser la détection d'une piste anormale le plus précisément et rapidement possible, après avoir reçu ses premiers messages AIS, et cela sans devoir modifier continuellement le seuil de détection en fonction de la durée de la piste.

Le but de l'invention est donc de proposer un procédé de détection d'anomalie de pistes qui réponde à ces problèmes.

A cet effet, l'invention a pour objet un procédé de détection d'anomalie de pistes, une piste comportant une succession temporelle de données, le procédé comprenant, dans une phase de configuration, les étapes de : entrainement d'un réseau de neurones sur une pluralité de pistes d'entrainement pour prédire une valeur de log-vraisemblance d'une données d'une piste ; calcul d'une valeur de log-vraisemblance moyenne pour chaque piste d'un ensemble de pistes de validation et calcul d'une médiane sur les valeurs de log-vraisemblance moyenne calculées, la valeur de log-vraisemblance moyenne d'une piste étant obtenue en moyennant la valeur de log-vraisemblance des données de la piste considérée, la valeur de log-vraisemblance d'une donnée étant estimée au moyen du réseau de neurones entraîné, calcul d'un score sur la valeur de log-vraisemblance moyenne de chaque piste d'un ensemble de pistes de test par rapport à la médiane et calcul d'un coefficient statistique à partir des scores calculés ; définition d'un seuil d'anormalité à partir de la médiane et du coefficient statistique; le procédé comprenant en outre, dans une phase d'inférence, les étapes de : acquisition d'au moins une piste d'intérêt, traitement de la piste d'intérêt en : calculant une valeur de log-vraisemblance moyenne de la piste d'intérêt en moyennant les valeurs de log-vraisemblance des données qui composent la piste d'intérêt, la valeur de log-vraisemblance d'une donnée étant estimée au moyen du réseau de neurones entraîné, calculer un score de la valeur de log-vraisemblance moyenne de la piste d'intérêt par rapport à la médiane, et comparer le score de la valeur de log-vraisemblance moyenne de la piste d'intérêt au seuil d'anormalité, la piste d'intérêt étant classée comme « anormale » lorsque le score de la valeur de log-vraisemblance moyenne de la piste d'intérêt est supérieure au seuil d'anormalité, et « normale » sinon.

Suivant d'autres aspects avantageux de l'invention, le procédé de détection d'anomalie de pistes comprend une ou plusieurs des caractéristiques suivantes, prises isolément ou suivant toutes les combinaisons techniquement possibles :

- le coefficient statistique est le coefficient de l'algorithme MAD sur les scores des valeurs de log-vraisemblance moyenne des pistes de l'ensemble des pistes de test par rapport à la médiane ;
- le seuil d'anormalité S est défini selon l'équation suivante :

$$S = \mathrm{MED_{VALID}} + \mathrm{nb\_MAD} \times \mathrm{C\_MAD}$$

avec $\mathrm{MED_{VALID}}$ la médiane, C_MAD le coefficient de l'algorithme MAD et nb_MAD un coefficient;
- une piste est une piste de messages AIS, de plots radar, de détections satellite, ou de positions géo référencées GPS ;
- une donnée étant un message AIS, une piste anormale consiste en : une anomalie de déviation ; une anomalie d'impossibilité ou de coupure du système AIS ; une anomalie de risque de collision, ou une anomalie d'entrée dans une zone non usuelle ;
- l'étape de traitement de la piste d'intérêt est effectuée en temps réel, de préférence à chaque mise à jour de la piste d'intérêt conduisant à l'ajout d'une donnée ;
- une longueur d'une piste d'intérêt est configurable par une fenêtre glissante ;
- les pistes d'entrainement et de validation sont des pistes dont la majorité est considérée comme normales ; et

- le réseau de neurones est le réseau GeoTrackNet.

L'invention a également pour objet un produit programme d'ordinateur comportant des instructions logicielles qui, lorsqu'elles sont exécutées par un ordinateur, mettent en œuvre tout ou partie des étapes du procédé précédent.

L'invention apparaitra plus clairement à la lecture de la description qui va suivre, donnée uniquement à titre d'exemple non limitatif et faite en référence aux dessins dans lesquels :

- la figure 1 est une vue schématique d'un système pour la détection d'anomalie de pistes, recevant les messages AIS d'un navire pisté ;
- la figure 2 est une illustration d'une zone géographique surveillée ; et
- la figure 3 est un organigramme des étapes d'un mode de réalisation préféré du procédé de détection d'anomalie de pistes selon l'invention, mis en œuvre par le dispositif de détection d'anomalie de pistes de la figure 1, pour identifier des pistes anormales dans la zone géographique de la figure 2.

Bien que la présente description soit faite pour le cas particulier de pistes fondées sur des messages AIS, l'invention s'applique à tout type de pistes, notamment des pistes constituées de plots radar, de détections satellite, de relevés GPS, etc.

A partir d'une piste, constituée par la succession de N messages AIS provenant d'un navire, on cherche à savoir si ce navire suit une route normale ou anormale par rapport à un ensemble de routes considérées comme normales.

Par exemple, les anomalies détectables sont par exemple : des anomalies de déviation ; d'impossibilité ou de coupure AIS ; ou d'entrée dans une zone non usuelle.

L'invention s'appuie également sur l'algorithme GeoTrackNet, mais modifie la manière d'utiliser les résultats fournis par cet algorithme pour faciliter les calculs.

On cherche à déterminer si la route suivie par un navire 1 est normale ou anormale.

Le navire 1 est équipé d'une balise AIS 2 émettant périodiquement des messages AIS, $x_t$, par exemple au moyen d'une antenne VHF.

Une station de surveillance 3, à terre ou, de préférence, embarqué à bord d'un aéronef de surveillance maritime, surveille la zone géographique traversée par le navire 1.

La station de surveillance 3 piste le navire 1 à partir des message AIS reçus.

Pour cela, la station 3 comporte au moins un capteur 8, configuré pour acquérir les messages AIS $x_t$ au fil du temps et les transmettre, sous forme de signaux numériques, à un dispositif de détection d'anomalies de pistes 10.

Le dispositif 10 est un ordinateur comportant des moyens de calcul, tels qu'un processeur, et des moyens de mémorisation, tels qu'une mémoire. La mémoire stocke notamment les instructions de programmes d'ordinateurs, en particulier un programme dont l'exécution permet la mise en œuvre du procédé selon l'invention.

Le dispositif 10 est ainsi programmé pour élaborer une piste à partir de l'ensemble des N derniers messages AIS $x_t$ reçus successivement du navire 1.

Le dispositif 10 est ainsi programmé pour qualifier cette piste d'intérêt de normale ou d'anormale en mettant en œuvre le procédé selon l'invention, de préférence en temps réel, au fur et à mesure de la réception de nouveaux messages AIS.

En variante, la piste d'intérêt est analysée en temps différé, à la suite d'une campagne d'acquisition de messages AIS.

Plus précisément, le dispositif de détection d'anomalie de pistes 10 comprend un module d'entrée 22, un module de traitement 24 et un module de sortie 26.

Le module d'entrée 22 permet de recevoir les signaux numériques du capteur 8 et reconstruire une piste à partir d'une série de N messages AIS successifs. Une piste est en fait d'une fenêtre glissante de longueur fixe, pour retenir les N derniers messages AIS.

La longueur d'une piste est fixe, mais est configurable par l'opérateur.

Le module de traitement 24 permet de discriminer si la piste d'intérêt en sortie du module 22 est une piste normale ou anormale.

Le module de traitement 24 comprend une unité d'entrainement d'un réseau de neurones 32, une unité de de calcul de log-vraisemblance moyenne 33, une unité de calcul de médiane 34, une unité de calcul de score MAD 35, une unité de calcul de coefficient MAD 36 et une unité de détermination d'un seuil d'anormalité 37 et une unité de discrimination 38.

Le dispositif 10 comporte en outre une base de données 28, stockant notamment des données d'apprentissage constituées de lots de pistes d'entrainement et de lots de pistes de validation, et de lots de pistes de test et une pluralité de médianes des log-vraisemblances moyennes des pistes des lots de pistes de validation.

Chaque médiane de la pluralité de médianes est associée à une durée spécifique des pistes de validation utilisées pour la calculer. Il y a par exemple une médiane des log-vraisemblances moyennes d'un ensemble de pistes de validation de 10 mn, une médiane pour un ensemble de pistes de validation 20 mn, etc. pour des durées de piste 40 mn, 1h, 2h, 3h et pour un ensemble de validation dont la durée des pistes va de 4h à 24h.

Enfin, une fois traitée par le module de traitement 24, la piste d'intérêt labellisée est transmise au module de sortie 26.

Le module 26 est, par exemple, une application qui affiche une alerte sur l'écran d'une interface homme machine 12 du dispositif 10. Cet affichage du label de la piste d'intérêt permet à l'opérateur de concentrer ses actions sur les pistes anormales afin d'optimiser les ressources de surveillance et/ou d'intervention sur les navires correspondants.

En variante, le module 26 est une application automatique qui génère une action en fonction des pistes anormales. L'action générée est, par exemple, alerter l'équipage du navire dont la route est jugée anormale d'un risque potentiel et/ou proposer une ou plusieurs route(s) de correction.

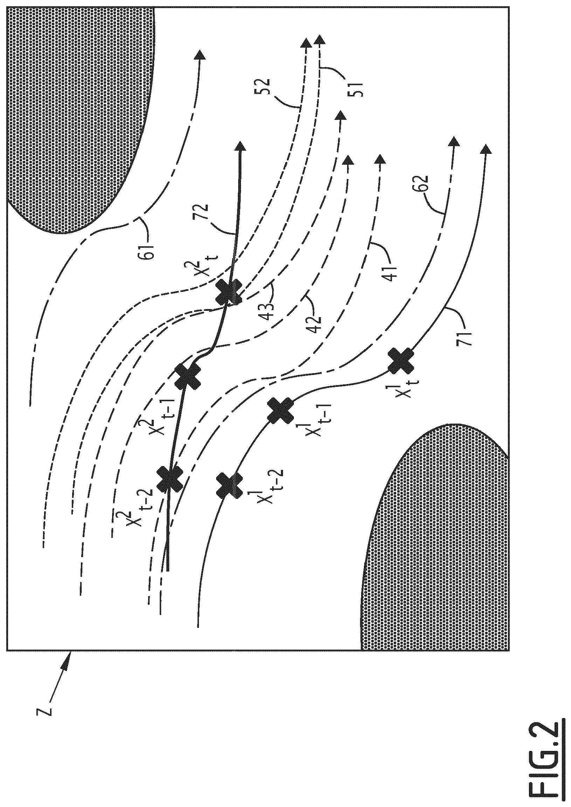

Sur la figure 2, une zone géographique d'intérêt Z, maritime dans le cas présenté, est surveillée par la station 3.

La zone d'intérêt Z est traversée par une pluralité de pistes.

Les pistes n'ont pas forcément toutes la même longueur en termes de nombre de messages AIS les constituant.

Parmi ces pistes on distingue des pistes d'intérêt à traiter et des pistes d'historique.

Parmi ces pistes d'historique, il y a des pistes d'entrainement (comme les pistes 41, 42, 43), des pistes de validation (comme les pistes 51 et 52) et des pistes de test (comme les pistes 61 et 62).

Les pistes d'historique sont des pistes pour l'apprentissage et la configuration du traitement.

Les pistes d'entrainement et de validation sont considérées comme majoritairement normales pour l'entrainement et le calcul des médianes de log-vraisemblance moyenne.

Les pistes de test comportent des pistes considérées comme normales (comme la piste 62) et des pistes considérées comme anormales (comme la piste 61).

Les pistes d'intérêt sont des pistes que la mise en œuvre du procédé selon l'invention va permettre de classer comme normale (cas de la piste 71) soit comme anormale (cas de la piste 72). Sur la figure 2, les trois derniers messages (par rapport à l'instant courant t), $x^1_t$, $x^1_{t-1}$ et $x^1_{t-2}$, de la piste 71 et les trois derniers messages $x^2_t$, $x^2_{t-1}$ et $x^2_{t-2}$ de la piste 72 sont représentés.

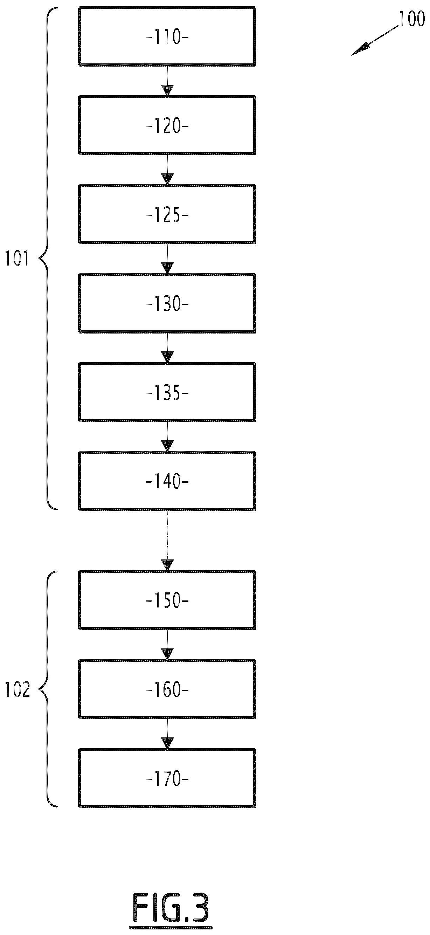

Le fonctionnement du dispositif de détection d'anomalies de pistes 10 va maintenant être décrit en référence à la figure 3, qui illustre un mode de réalisation préféré du procédé 100 de détection d'anomalies de pistes.

Dans une phase de configuration 101, réalisée au préalable d'une mission, le procédé 100 comporte une étape d'entrainement 110, au cours de laquelle l'unité d'entrainement d'un réseau de neurones 32 est exécutée pour entrainer un réseau de neurones sur un ensemble de pistes d'entrainement.

Le réseau de neurones est de préférence un Réseau Neuronal Récurrent Variationnel - VRNN (« variational recurrent neural network »).

De préférence encore, il s'agit du modèle Geo-TrackNet.

L'entrainement s'effectue sur un lot de pistes d'entraînement, qui est extrait de la base de données 28, lesdites pistes d'entrainement étant des pistes historiques enregistrées par le passé.

Le but de l'entrainement est d'apprendre une distribution qui maximise une log-vraisemblance d'une séquence de T messages AIS successifs extraits d'une piste. T est un entier inférieur à N, le nombre de messages AIS total de la piste.

Dans ce qui suit on définit une séquence de piste comme un ensemble de T messages AIS successifs d'une même piste. Une séquence est notée : $x_{1:T} = \{x_t\}_{1:T}$, où $x_T$ est le dernier message AIS de la séquence.

On parle donc de log-vraisemblance d'une séquence de piste AIS, évaluée à partir du dernier message considéré et des T-1 messages précédents.

La log-vraisemblance de la séquence de piste AIS est définie comme :

$$\log p(\mathbf{x}_{1:T}) = \log p(\mathbf{x}_1) \sum_{t=2}^{T} \log p(\mathbf{x}_t | \mathbf{x}_{1:t-1})$$

Avec :

- $\mathbf{x_t}$: le t-ième message AIS de la séquence ;
- $p(\mathbf{x}_t | \mathbf{x}_{1:t-1})$, la probabilité conditionnelle d'obtenir le message $\mathbf{x_t}$ connaissant la suite des messages qui le précède ;
- $p(\mathbf{x}_1)$ la probabilité du premier message de la séquence ; et,
- $p(\mathbf{x}_{1:T})$ : la vraisemblance de la séquence considérée.

Avantageusement, est repris la technique d'entraînement du réseau de neurones GeoTrackNet présentée en détails dans le papier : https://arxiv.org/pdf/1912.00682.pdf.

Un réseau de neurones entrainé est obtenu en sortie de l'étape 110. Finalement, pour un message $\mathbf{x}_t$ d'une piste, le réseau de neurones entrainé prédit la log-vraisemblance de ce message en tant que dernier message d'une séquence de T messages.

Puis, toujours dans la phase de configuration 101, le procédé 100 comporte une étape 120 de calcul de log-vraisemblance moyenne et une étape 125 de calcul de médianes.

Dans l'étape 120, pour chaque piste d'un lot de pistes de validation extrait de la base de données 28, le réseau de neurones précédemment entrainé est utilisé pour prédire une valeur de log-vraisemblance pour chacun des messages de la piste de validation considérée.

Puis, l'unité 33 est exécutée pour déterminer une valeur de log-vraisemblance moyenne pour chaque piste de validation.

La valeur de la log-vraisemblance moyenne d'une piste est égale à la moyenne des valeurs de log-vraisemblances de chacun des messages qui composent ladite piste.

Puis, dans l'étape 125, l'unité 34 est exécutée pour déterminer la médiane, **MED$_{VALID}$,** des valeurs de log-vraisemblance moyenne pour l'ensemble des pistes de validation du lot considéré.

Cette médiane est finalement stockée dans la base de données 28.

Pour rappel, la médiane, **MED$_{VALID}$,** est la valeur de log-vraisemblance moyenne d'un lot de pistes de validation, pour laquelle 50% des valeurs de log-vraisemblance moyenne des pistes de validation de ce lot sont au-dessus de ladite valeur et 50% des valeurs de log-vraisemblance moyenne des pistes de validation de ce lot sont au-dessous de ladite valeur.

Avantageusement, plusieurs médianes sont stockées selon des caractéristiques propres aux différentes pistes de validation, en particulier la durée de piste.

Puis, toujours dans la phase de configuration 101, le procédé 100 comporte une étape 130 de calcul d'un score MAD et une étape 135 de calcul d'un coefficient MAD.

Dans l'étape 130, on considère un lot de pistes de test extrait de la base de données 28 d'ajustement des seuils de détection piste normale/anormale.

Pour chaque piste de test, l'unité 34 est d'abord exécutée pour déterminer une valeur de la log-vraisemblance moyenne.

Pour chaque piste de test, l'unité 35 calcule un score, score_MAD, de sa valeur de log-vraisemblance moyenne.

Ce score correspond à l'écart absolu entre la valeur de log-vraisemblance moyenne de la piste de test $L_i$ et la médiane des valeurs de log-vraisemblance moyenne des pistes de l'ensemble de validation déterminée à l'étape 125 :

$$\text{score\_MAD} = |L_i - \text{MED}_{VALID}|$$

De préférence, la valeur de médiane est choisie en fonction de la durée de la piste de test. C'est celle des pistes de validation ayant une durée se rapprochant le plus de la durée de la piste de test considérée.

Puis, dans l'étape 135, l'unité 36 est ensuite exécutée pour mettre en œuvre l'algorithme Median Absolute Deviation -MAD (pour déviation absolue moyenne d'une médiane).

L'algorithme MAD fournit alors un coefficient MAD, **C_MAD,** à partir des scores, score_MAD, des pistes de test :

$$\text{C\_MAD} = \text{med}(\textbf{scores\_MAD})$$

Le coefficient MAD est en fait la médiane des écarts absolus des valeurs de log-vraisemblance moyenne des pistes de test à la médiane des valeurs de log-vraisemblance moyenne des pistes de test de validation.

Toujours dans la phase de configuration 101, le procédé 100 comporte une étape 140 de calcul de seuil d'anormalité.

Dans cette étape, l'unité 37 est par exemple exécutée pour déterminer un seuil d'anormalité S à partir des paramètres statistiques déterminés aux étapes précédentes.

Par exemple, le seuil d'anormalité est défini comme :

$$S = MED_{VALID} + nb\_MAD \times C\_MAD$$

où **nb_MAD** est un coefficient fixe durant tout le processus de détection, égal par exemple à trois ou quatre.

Si pour une piste de test, son score, score_MAD, est supérieur au seuil d'anormalité, S, cette piste est considérée comme « anormale », en revanche si son score est inférieur ou égal au seuil d'anormalité, S, cette piste est considérée comme « normale ».

En variante, le seuil d'anormalité est une valeur ajustable par l'opérateur en fonction des besoins et / ou des caractéristiques des pistes.

Dans une phase d'inférence 102 du procédé 100, qui est réalisée au cours de la mission de détection, le procédé 100 comporte une étape d'acquisition 150, au cours de laquelle le module d'entrée 12 est exécuté afin d'élaborer une piste d'intérêt à partir de la succession des messages AIS provenant d'un même navire 1.

Puis, dans une étape 160, l'unité de discrimination 38 est exécutée pour surveiller la piste d'intérêt et la labelliser normale (cas de la piste 71) ou anormale (piste 72).

D'abord, l'unité 38 appelle l'unité 33 pour calculer une valeur de log-vraisemblance moyenne de la piste d'intérêt. Pour cela, la moyenne des valeurs de log-vraisemblance des N derniers messages de la piste d'intérêt est calculée, la valeur de log-vraisemblance d'un message étant estimée par le réseau de neurones convenablement paramétré.

Ensuite, l'unité 38 appelle l'unité 35 pour calculer un score MAD de la valeur de log-vraisemblance moyenne de la piste d'intérêt.

Enfin, l'unité 38 compare le score MAD de la piste d'intérêt avec le seuil d'anormalité S ajusté dans la phase 101.

La piste d'intérêt est alors considérée « anormale » si son score MAD est supérieur au seuil d'anormalité, et « normale » sinon.

Enfin, dans une étape 170, le module d'affichage 26 est exécuté pour afficher la piste d'intérêt sur l'IHM 12 et une alarme lorsque l'étiquette associée à cette piste d'intérêt est « anormale ». L'alarme doit aider l'opérateur à identifier les pistes qui s'écartent des comportements normaux appris.

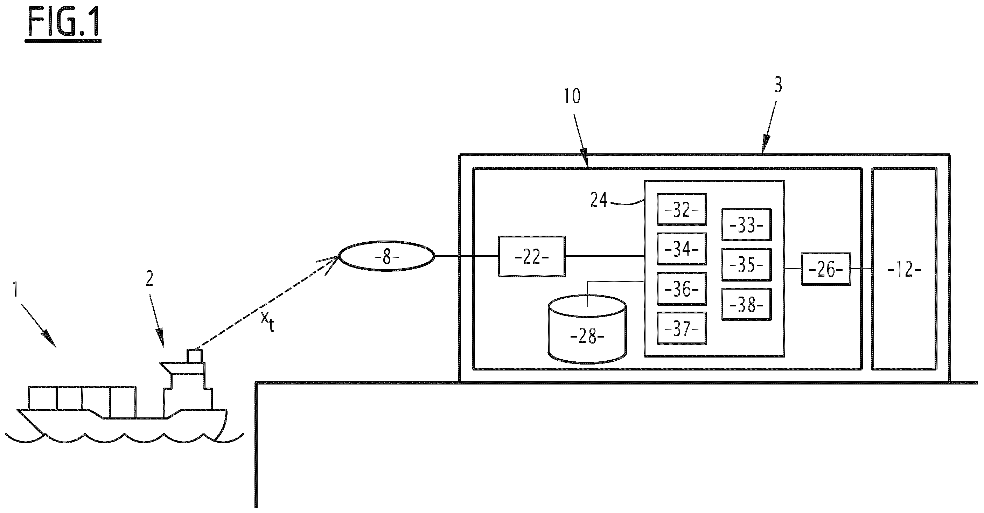

Si sur la figure 1, les différentes unités mises en œuvre lors du procédé selon l'invention ont été représentées par convenance comme appartenant à un même dispositif électronique 10. Cependant, en variante et de préférence, les étapes de la phase de configuration 101 du procédé 100 (et les unités associées) sont réalisées sur un premier calculateur (par exemple au sol, présentant des capacités de calcul normales ou élevées), tandis que les étapes de la phase d'inférence 102 du procédé 100 (et les unités associées) sont réalisées sur un second calculateur (par exemple embarqué, présentant des capacités de calcul contraintes). Les premier et second calculateur sont indépendants. Le contenu de la base de données associée à chaque calculateur est adapté aux étapes effectivement mises en œuvre par ce calculateur.

Avantageusement, le second calculateur est réalisé sous forme d'un composant logique programmable, tel qu'un FPGA (de l'anglais *Field Programmable Gate Array*), ou encore sous forme d'un circuit intégré, tel qu'un ASIC (de l'anglais *Application Specific Integrated Circuit).*

De manière générale, un réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

En variante, le réseau de neurones utilisé est de type « Transformers ».

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un tel réseau de neurones est entraîné sur un ensemble de pistes d'entrainement comportant en grande majorité des pistes considérées comme normales.

La présente invention présente un certain nombre d'avantages :

Tout d'abord, l'invention permet de discriminer les pistes anormales dans un ensemble de pistes d'intérêt de façon plus économique en temps de calcul pour des performances similaires. En effet, il s'agit d'effectuer une simple opération de seuillage sur le score MAD de la log-vraisemblance moyenne d'une piste.

De plus, l'invention permet de discriminer les pistes anormales de façon plus économique en termes de ressources numériques.

Avec l'invention, un temps d'inférence de détection d'anomalies de l'ordre de 1 seconde est atteint pour 100 pistes, pour des performances équivalentes à celle de la méthode de l'état de l'art.

L'invention permet également de détecter des anomalies sur une piste courte. Plus précisément, une détection de l'ordre de 15% de pistes anormales en plus pour des pistes allant de 10 à 30 minutes.

Enfin la méthode permet d'utiliser continuellement le même seuil de détection quelle que soit la durée de la piste de test, contrairement à la méthode de l'état de l'art.

**Revendications**

1. Procédé (100) mis en oeuvre par ordinateur de détection d'anomalie de pistes, une piste comportant une succession temporelle de données comportant, à chaque pas de temps, des informations du type position, vitesse et cap d'un objet pisté, le procédé comprenant, dans une phase de configuration, les étapes de :

    a. entrainement d'un réseau de neurones (110) sur une pluralité de pistes d'entrainement pour prédire une valeur de log-vraisemblance d'une données d'une piste ;
    b. calcul (120) d'une valeur de log-vraisemblance moyenne pour chaque piste d'un ensemble de pistes de validation et calcul (125) d'une médiane sur les valeurs de log-vraisemblance moyenne calculées, la valeur de log-vraisemblance moyenne d'une piste étant obtenue en moyennant la valeur de log-vraisemblance des données de la piste considérée, la valeur de log-vraisemblance d'une donnée étant estimée au moyen du réseau de neurones entraîné,
    c. calcul (130) d'un score sur la valeur de log-vraisemblance moyenne de chaque piste d'un ensemble de pistes de test par rapport à la médiane et calcul (135) d'un coefficient statistique à partir des scores calculés ;
    d. définition (140) d'un seuil d'anormalité à partir de la médiane et du coefficient statistique;

    le procédé comprenant en outre, dans une phase d'inférence, les étapes de :

    e. acquisition (150) d'au moins une piste d'intérêt (3),
    f. traitement (160) de la piste d'intérêt en :

        ◦ calculant une valeur de log-vraisemblance moyenne de la piste d'intérêt en moyennant les valeurs de log-vraisemblance des données qui composent la piste d'intérêt, la valeur de log-vraisemblance d'une donnée étant estimée au moyen du réseau de neurones entraîné,
        ◦ calculant un score de la valeur de log-vraisemblance moyenne de la piste d'intérêt par rapport à la médiane, et
        ◦ comparant le score de la valeur de log-vraisemblance moyenne de la piste d'intérêt au seuil d'anormalité, la piste d'intérêt étant classée comme « anormale » lorsque le score de la valeur de log-vraisemblance moyenne de la piste d'intérêt est supérieure au seuil d'anormalité, et « normale » sinon.

2. Procédé selon la revendication 1, dans lequel le coefficient statistique est le coefficient de l'algorithme MAD sur les scores des valeurs de log-vraisemblance moyenne des pistes de l'ensemble des pistes de test par rapport à la médiane.

3. Procédé selon la revendication 2, dans lequel le seuil d'anormalité S est défini selon l'équation suivante :

$$S = \text{MED}_{\text{VALID}} + \text{nb\_MAD} \times \text{C\_MAD}$$

Avec $\text{MED}_{\text{VALID}}$ la médiane, C_MAD le coefficient de l'algorithme MAD et nb_MAD un coefficient.

4. Procédé selon l'une quelconque des revendications précédentes, dans lequel une piste est une piste de messages AIS, de plots radar, de détections satellite, ou de positions géo référencées GPS.

5. Procédé selon l'une quelconque des revendications précédentes, dans lequel, une donnée étant un message AIS, une piste anormale consiste en : une anomalie de déviation ; une anomalie d'impossibilité ou de coupure du système AIS ; une anomalie de risque de collision, ou une anomalie d'entrée dans une zone non usuelle.

6. Procédé selon l'une quelconque des revendications précédentes, dans lequel l'tape f est effectuée en temps réel, de préférence à chaque mise à jour de la piste d'intérêt conduisant à l'ajout d'une donnée.

7. Procédé selon l'une quelconque des revendications précédentes, dans lequel une longueur d'une piste d'intérêt (3) est configurable par une fenêtre glissante.

8. Procédé selon l'une quelconque des revendications précédentes, dans lequel les pistes d'entrainement et de validation sont des pistes dont la majorité est considérée comme normales.

9. Procédé selon l'une quelconque des revendications précédentes, dans lequel le réseau de neurones est le réseau GeoTrackNet.

10. Programme d'ordinateur comportant des instructions logicielles qui, lorsqu'elles sont exécutées par un ordinateur, mettent en œuvre un procédé selon l'une quelconque des revendications précédentes.

**Patentansprüche**

1. **Computerimplementiertes** Verfahren (100)

zum Erkennen einer Spuranomalie, eine Spur umfassend eine zeitliche Abfolge von Daten, die in jedem Zeitschritt Informationen vom Typ Position, Geschwindigkeit und Kurs eines verfolgten Objekts enthalten, das Verfahren umfassend in einer Konfigurationsphase die folgenden Schritte:

a. Trainieren eines neuronalen Netzes (110) auf einer Vielzahl von Trainingsspuren, um einen Log-Wahrscheinlichkeitswert von Daten einer Spur vorherzusagen;

b. Berechnen (120) eines durchschnittlichen Log-Wahrscheinlichkeitswerts für jede Spur in einem Satz von Validierungsspuren und Berechnen (125) des Medians dieser berechneten durchschnittlichen Werte; wobei der durchschnittliche Log-Wahrscheinlichkeitswert einer Spur durch Mittelung der Log-Wahrscheinlichkeitswerte der Datenpunkte der betreffenden Spur erlangt wird, und der Log-Wahrscheinlichkeitswert eines Datenpunkts mittels des trainierten neuronalen Netzes geschätzt wird,

c. Berechnen (130) einer Punktzahl auf Basis des durchschnittlichen Log-Wahrscheinlichkeitswerts jeder Spur eines Testspurensatzes in Bezug auf den Median und Berechnen (135) eines statistischen Koeffizienten anhand der berechneten Punktzahlen;

d. Definieren (140) eines Anomalieschwellenwerts anhand des Medians und des statistischen Koeffizienten;

das Verfahren in einer Inferenzphase ferner umfassend die folgenden Schritte:

e. Erfassen (150) mindestens einer Spur von Interesse (3),

f. Verarbeiten (160) der Spur von Interesse durch:

○ Berechnen eines durchschnittlichen Log-Wahrscheinlichkeitswerts der Spur von Interesse durch Mittelung der Log-Wahrscheinlichkeitswerte der Daten, die die Spur bilden, wobei der Log-Wahrscheinlichkeitswert eines Datensatzes mittels des trainierten neuronalen Netzes geschätzt wird,
○ Berechnen einer Punktzahl des durchschnittlichen Log-Wahrscheinlichkeitswerts der Spur von Interesse in Bezug auf den Median, und
○ Vergleichen der Punktzahl des durchschnittlichen Log-Wahrscheinlichkeitswerts der Spur von Interesse mit dem Anomalieschwellenwert, wobei die Spur von Interesse als "anormal" eingestuft wird, wenn diese Punktzahl den Schwellenwert übersteigt, andernfalls als "normal".

2. Verfahren nach Anspruch 1, wobei der statistische Koeffizient der Koeffizient des MAD-Algorithmus auf die Punktzahlen der durchschnittlichen Log-Wahrscheinlichkeitswerte der Spuren aller Testspuren in Bezug auf den Median ist.

3. Verfahren nach Anspruch 2, wobei der Anomalieschwellenwerts S gemäß der folgenden Gleichung definiert ist:

$$S = MED_{VALID} + nb\_MAD \times C\_MAD$$

wobei $MED_{VALID}$ der Median, $C\_MAD$ der Koeffizient des MAD-Algorithmus und $nb\_MAD$ ein Koeffizienten sind.

4. Verfahren nach einem der vorherigen Ansprüche, wobei eine Spur von AIS-Meldungen, Radarplots, Satellitenerfassungen oder georeferenzierte GPS-Positionen darstellt.

5. Verfahren nach einem der vorherigen Ansprüche, wobei, wenn Daten eine AIS-Meldung sind, eine abnormale Spur aus Folgendem besteht: einer Abweichungsanomalie; einer Anomalie wegen Unmöglichkeit oder Abschaltung des AIS-Systems; einer Anomalie wegen Kollisionsgefahr oder einer Anomalie wegen Einfahrt in ein nicht-übliches Gebiet.

6. Verfahren nach einem der vorherigen Ansprüche, wobei das Tippen f in Echtzeit erfolgt, vorzugsweise bei jeder Aktualisierung der Spur von Interesse, die zum Hinzufügen von Daten führt.

**7.** Verfahren nach einem der vorherigen Ansprüche, wobei die Länge der Spur von Interesse (3) durch ein gleitendes Fenster konfigurierbar ist.

**8.** Verfahren nach einem der vorherigen Ansprüche, wobei die Trainings- und Validierungsspuren Spuren sind, von denen die Mehrheit als normal betrachtet wird.

**9.** Verfahren nach einem der vorherigen Ansprüche, wobei das neuronale Netz GeoTrackNet ist.

**10.** Rechnerprogramm, umfassend Softwareanweisungen, die, wenn sie von einem Rechner ausgeführt werden, ein Verfahren nach einem der vorherigen Ansprüche durchführen.

**Claims**

**1.** A computer-implemented method (100) for detecting track anomalies, a track comprising a temporal sequence of data including, at each time step, information relating to the position, speed and heading of a tracked object, the method comprising, in a configuration phase, the steps of:

a. training a neural network (110) on a plurality of training tracks to predict a log-likelihood value of a track's data;
b. calculation (120) of an average log-likelihood value for each track in a set of validation tracks and calculation (125) of a median of the calculated average log-likelihood values, the average log-likelihood value of a track being obtained by averaging the track's data log-likelihood values, the log-likelihood value of a datum being estimated by means of the trained neural network,
c. calculation (130) of a score based on the mean log-likelihood of each track in a set of test tracks relative to the median, and calculation (135) of a statistical coefficient from the calculated scores;
d. definition (140) of a threshold of abnormality based on the median and the statistical coefficient;

the method further comprising, in an inference phase, the steps of:

e. acquisition (150) of at least one track of interest (3),
f. processing (160) of the track of interest by:

∘ calculating an average log-likelihood value of the track of interest by averaging the log-likelihood values of the data that compose it, the log-likelihood value of a data item being estimated using the trained neural network,
∘ calculating a score of the mean log-likelihood value of the track of interest relative to the median, and
∘ comparing the score of the mean log-likelihood value of the track of interest with the abnormality threshold, the track of interest being classified as "abnormal" when the score of the mean log-likelihood value of the track of interest is greater than the abnormality threshold, and "normal" otherwise.

**2.** The method according to claim 1, wherein the statistical coefficient is determined using a MAD algorithm on scores of mean log-likelihood values of tracks of a set of test tracks with respect to a median.

**3.** Method according to claim 2, in which the abnormality threshold S is defined according to the following equation:

$$S = MED_{VALID} + nb\_MAD \times C\_MAD$$

With $MED_{VALID}$, $C\_MAD$ is the MAD algorithm coefficient and $nb\_MAD$ a coefficient.

**4.** A method according to any of the preceding claims, wherein a track comprises AIS messages, radar plots, satellite detections, or GPS geo-referenced positions.

**5.** A method according to any one of the preceding claims, wherein the data item is an AIS message, and an abnormal track is one of: a deviation anomaly; an AIS system failure or outage; a collision-risk anomaly; or entry into an unusual zone.

**6.** A method according to any one of the preceding claims, wherein step f is carried out in real time, preferably upon each update of the track of interest, leading to the addition of a data item.

**7.** A method according to any one of the preceding claims, in which a length of a track of interest (3) is configurable by a sliding window.

**8.** A method according to any one of the preceding claims, in which the training and validation tracks are tracks the majority of which are considered normal.

**9.** A method according to any of the preceding claims, wherein the neural network is GeoTrackNet.

**10.** A computer program comprising software instructions which, when executed by a computer, imple-

**EP 4 579 524 B1**

ment a method according to any one of the preceding claims.

# FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DUONG NGUYEN et al.** GeoTrackNet-A Maritime Anomaly Detector using Probabilistic Neural Network Representation of AIS Tracks and A Contrario Detection. *arXiv:1912.00682v4*, 2021